# EUROPEAN PATENT APPLICATION

(11) **EP 3 998 576 A2**
(43) Date of publication of application: **18.05.2022**
(21) Application number: 21212392.1
(22) Date of filing: 03.12.2021
(51) Int. Cl.: G06T 3/40

(54) **IMAGE STITCHING METHOD AND APPARATUS, DEVICE, AND MEDIUM**

(30) Priority: 24.03.2021 CN 202110315919
(71) Applicant: BEIJING BAIDU NETCOM SCIENCE TECHNOLOGY CO., LTD., No.10 Shangdi 10th Street Haidian District Beijing 100085 (CN)
(72) Inventor: YE, Xiaoqing, Beijing, 100085 (CN); CHEN, Qu, Beijing, 100085 (CN); TAN, Xiao, Beijing, 100085 (CN); SUN, Hao, Beijing, 100085 (CN)
(74) Representative: Isarpatent

(57) **Abstract**

An image stitching method and apparatus, a device, and a medium is provided. An implementation solution is: obtaining a first image and a second image, where the first image and the second image have an overlapping area; determining a first stitching line segment of the first image and a second stitching line segment of the second image, where the second stitching line segment has a first matching line segment in the first image; determining a first stitching area of the first image based on the first stitching line segment and the first matching line segment; configuring a first target canvas at least based on the first stitching area; determining, for each pixel of a plurality of pixels included in the first stitching area, a corresponding mapping pixel in the first target canvas; and mapping pixel values of the plurality of pixels included in the first stitching area to the corresponding mapping pixels in the first target canvas, respectively, to obtain an image to be stitched of the first image.

## Description

### TECHNICAL FIELD

The present disclosure relates to the field of artificial intelligence and specifically to the technical field of computer vision, and particularly relates to an image stitching method and an apparatus, an electronic device, a computer-readable storage medium, and a computer program product.

### BACKGROUND

Artificial intelligence is a subject on making a computer to simulate some thinking processes and intelligent behaviors (such as learning, reasoning, thinking, planning, etc.) of a human, and involves both hardware-level technologies and software-level technologies. Artificial intelligence hardware technologies generally include technologies such as sensors, dedicated artificial intelligence chips, cloud computing, distributed storage, and big data processing. Artificial intelligence software technologies mainly include the following several general directions: computer vision technologies, speech recognition technologies, natural language processing technologies and machine learning/deep learning, big data processing technologies, and knowledge graph technologies.

Recognition of characters or text in images is a popular direction of computer vision and is widely used in a large number of application scenarios. During character recognition on printed text, handwritten text, or text displayed on a display device, due to the limited size of a single image, it is often necessary to stitch a plurality of images before the recognition of text or characters. However, when text or character recognition is performed on a stitched image obtained by using an existing image stitching method, the accuracy of an obtained recognition result is low due to the limitation of the existing image stitching method.

The methods described in this section are not necessarily methods that have been previously conceived or employed. It should not be assumed that any of the methods described in this section is considered to be the prior art just because they are included in this section, unless otherwise indicated expressly. Similarly, the problem mentioned in this section should not be considered to be universally recognized in any prior art, unless otherwise indicated expressly.

### SUMMARY

The present disclosure provides an image stitching method and apparatus, an electronic device, a computer-readable storage medium, and a computer program product.

According to an aspect of the present disclosure, there is provided an image stitching method, including: obtaining a first image and a second image, where the first image and the second image have an overlapping area; determining a first stitching line segment of the first image and a second stitching line segment of the second image, where the second stitching line segment has a first matching line segment in the first image; determining a first stitching area of the first image based on the first stitching line segment and the first matching line segment; configuring a first target canvas at least based on the first stitching area; determining, for each pixel of a plurality of pixels included in the first stitching area, a corresponding mapping pixel in the first target canvas; and mapping pixel values of the plurality of pixels included in the first stitching area to the corresponding mapping pixels in the first target canvas, respectively, to obtain an image to be stitched of the first image.

According to another aspect of the present disclosure, there is provided an image stitching apparatus, including: an obtaining unit configured to obtain a first image and a second image, where the first image and the second image have an overlapping area; a first determination unit configured to determine a first stitching line segment of the first image and a second stitching line segment of the second image, where the second stitching line segment has a first matching line segment in the first image; a second determination unit configured to determine a first stitching area of the first image based on the first stitching line segment and the first matching line segment; a configuration unit configured to configure a first target canvas at least based on the first stitching area; a third determination unit configured to determine, for each pixel in a plurality of pixels included in the first stitching area, a corresponding mapping pixel in the first target canvas; and a mapping unit configured to map pixel values of the plurality of pixels included in the first stitching area to the corresponding mapping pixels in the first target canvas, respectively, to obtain an image to be stitched of the first image.

According to another aspect of the present disclosure, there is provided a computer-readable storage medium storing including instructions, which, when executed by a computer, causes the computer to carry out the image stitching method described above.

According to another aspect of the present disclosure, there is provided a computer program product including instructions, which, when the program is executed by a computer, cause the computer to carry out the image stitching method described above.

According to one or more 08examples of the present disclosure, for two images to be stitched, first, a stitching line segment of one image and a matching line segment in the other image that matches the stitching line segment may be determined; then, a stitching area of the other image may be determined based on the matching line segment, and the stitching area of the image is mapped to a target canvas. Therefore, mapping the stitching area of the image to the target canvas can make sizes of objects of the same type in the images consistent, so that the problem of the images failing to be directly stitched due to varying sizes of objects of the same type in the images can be overcome, and there is no need to consider the merging of two consecutive frames in an overlapping area, greatly improving the stitching efficiency.

It should be understood that the content described in this section is not intended to identify critical or important features of the examples of the present disclosure, and is not used to limit the scope of the present disclosure either. Other features of the present disclosure will be easily comprehensible from the following description.

### BRIEF DESCRIPTION OF THE DRAWINGS

The drawings show examples and form a part of the specification, and are used to explain implementations of the examples together with a written description of the specification. The examples shown are merely for illustrative purposes and do not limit the scope of the claims. Throughout the drawings, identical reference signs denote similar but not necessarily identical elements.
Fig. 1 is a flowchart of an image stitching method according to an example of the present disclosure;
Fig. 2 is a schematic diagram of mapping between images and between an image and a canvas according to an example of the present disclosure;
Figs. 3 to 5 are flowcharts of an image stitching method according to an example of the present disclosure;
Fig. 6 is a schematic diagram of an image stitching result according to an example of the present disclosure;
Fig. 7 is a structural block diagram of an image stitching apparatus according to an of the present disclosure; and
Fig. 8 is a structural block diagram of an example electronic device that can be used to implement an of the present disclosure.

### DETAILED DESCRIPTION

Exemplary examples of the present disclosure are described below in conjunction with the accompanying drawings, where various details of the examples of the present disclosure are included to facilitate understanding, and should only be considered as exemplary. Therefore, those of ordinary skill in the art should be aware that various changes and modifications can be made to the examples described herein, without departing from the scope of the present disclosure. Likewise, for clarity and simplicity, description of well-known functions and structures are omitted in the following description.

In the present disclosure, unless otherwise stated, the terms "first", "second", etc., used to describe various elements are not intended to limit the positional, temporal or importance relationship of these elements, but rather only to distinguish one component from another. In some examples, the first element and the second element may refer to the same instance of the element, and in some cases, based on contextual descriptions, the first element and the second element may also refer to different instances.

The terms used in the description of the various examples in the present disclosure are merely for the purpose of describing particular examples, and are not intended to be limiting. If the number of elements is not specifically defined, it may be one or more, unless otherwise expressly indicated in the context. Moreover, the term "and/or" used in the present disclosure encompasses any of and all possible combinations of listed items.

In the related art, images are stitched based on matching feature point pairs and mapped to the same image. However, such a method is susceptible to distortion and perspective, resulting in varying sizes of stitched characters, making it impossible to stitch long text. For example, for text with a strong perspective effect, stitched text will become increasingly large, and the stitching will finally fail. In addition, the use of this method requires an additional design of a merging solution for merging overlapping areas of different images, and when there are too many images to be stitched, abrupt changes in brightness are easily caused, which may affect subsequent character recognition.

In order to solve the above technical problem, according to the present disclosure, for two images to be stitched, first, a stitching line segment of one image and a matching line segment in the other image that matches the stitching line segment may be determined; then, a stitching area of the other image may be determined based on the matching line segment, and the stitching area of the image is mapped to a target canvas. Therefore, mapping the stitching area of the image to the target canvas can make sizes of objects of the same type in the images consistent, so that the problem of the images failing to be directly stitched due to varying sizes of objects of the same type in the images can be overcome, and there is no need to consider the merging of two consecutive frames in an overlapping area, and the stitching efficiency is greatly improved.

In the present disclosure, the terms "point" and "pixel" are used interchangeably, and it is not intended to limit them to different objects. In some situations, "matching point", "endpoint", "midpoint", etc. may be understood as pixels at locations corresponding to these points in an image, or pixels near the corresponding locations that can implement the technical solutions of the present disclosure. This is not limited herein. Similarly, the term "side" may be understood as a combination of pixels formed by pixels corresponding to all "points" included in the "side", or another combination of pixels that can implement the technical solutions of the present disclosure. This is not limited herein.

Examples of the present disclosure will be described below in detail in conjunction with the drawings.

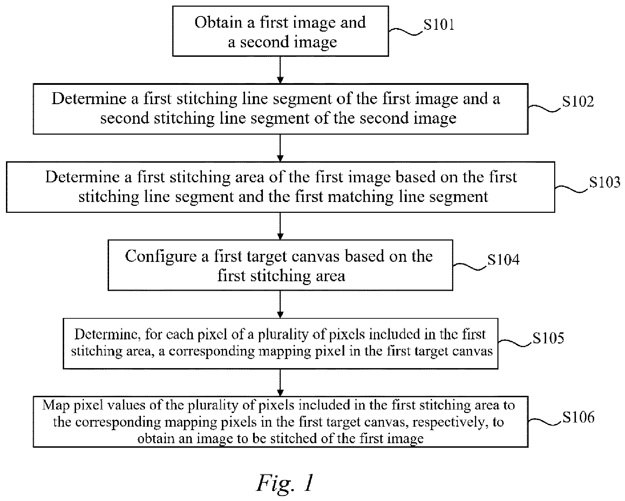

According to an aspect of the present disclosure, there is provided an image stitching method. As shown in Fig. 1, the image stitching method may include: step S101: obtaining a first image and a second image, where the first image and the second image have an overlapping area; step S 102: determining a first stitching line segment of the first image and a second stitching line segment of the second image, where the second stitching line segment has a first matching line segment in the first image; step S103: determining a first stitching area of the first image based on the first stitching line segment and the first matching line segment; step S104: configuring a first target canvas at least based on the first stitching area; step S105: determining, for each pixel of a plurality of pixels included in the first stitching area, a corresponding mapping pixel in the first target canvas, respectively; and step S106: mapping pixel values of the plurality of pixels included in the first stitching area to the corresponding mapping pixels in the first target canvas, to obtain an image to be stitched of the first image. Therefore, mapping the stitching area of the image to the target canvas can reduce and even eliminate a difference between sizes of objects of the same type in the images, so that the problem of the images failing to be directly stitched due to varying sizes of objects of the same type in the images can be overcome, and there is no need to consider the merging of two consecutive frames in an overlapping area, greatly improving the stitching efficiency.

According to some examples, the first image and the second image may be two consecutive video frames of the same video. The first image may be, for example, a previous video frame, and the second image may be, for example, a later video frame. In other words, a timestamp of the second image is greater than a timestamp of the first image. It can be understood that, alternatively or additionally, the first image is a later video frame, and the second image is a previous video frame.

According to some examples, both the first image and the second image may include a part of a target object, and both the first image and the second image may be captured by a tilted a video camera. An optical axis of the video camera may not be perpendicular to a surface on which the target object is placed.

Exemplarily, the target object may be an object including text. The technical solution of the present disclosure can reduce and even eliminate a difference between sizes of characters in the first image and the second image, so that the problem of the images failing to be directly stitched due to varying sizes of the characters in the images can be overcome, and there is no need to consider the merging of two consecutive frames in an overlapping area, thus the stitching efficiency is greatly improved.

It can be understood that the technical solution of the present disclosure is not limited to being only applicable to the stitching of text images, that is, the target object is not limited to an object including text, and may also be other objects.

According to some examples, when the foregoing target object is an object including text, both the first image and the second image may be images including one or more lines of characters.

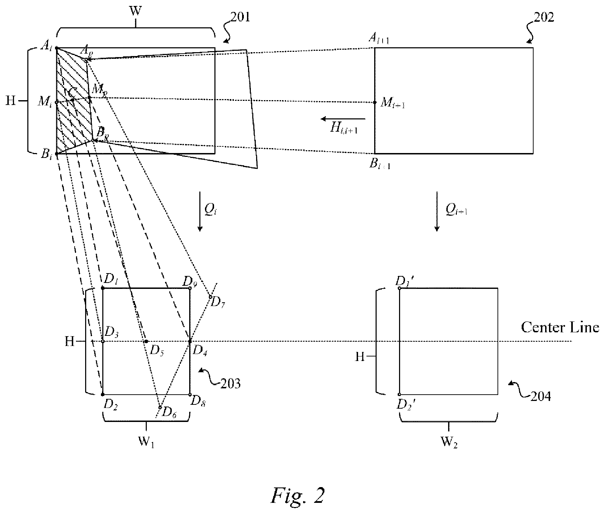

In an exemplary example, when a user uses a dictionary pen to scan one or more lines of text, a video camera of the dictionary pen captures a plurality of consecutive video frames, where the first image and the second image may be, for example, two adjacent video frames in the plurality of video frames. As shown in Fig. 2, the first image 201 is a previous video frame, and the second image 202 is a later video frame. Exemplarily, a size of each image is 200 × 200 pixels, the side length of each image may correspond to a size in the real world, for example, of 1.5 cm to 2 cm, and the number of frames captured is, for example, 30 frames per second to 120 frames per second.

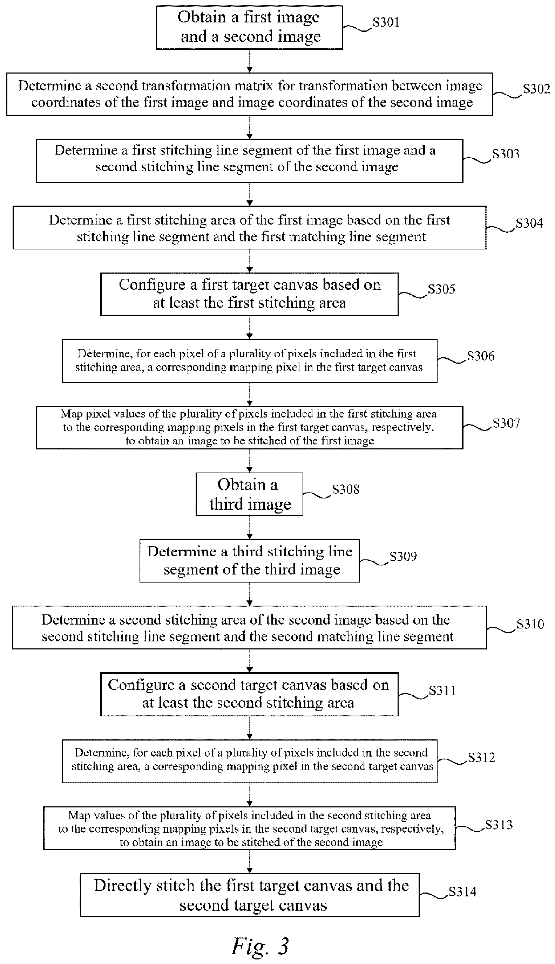

According to some examples, as shown in Fig. 3, the image stitching method may further include: step S302: determining a second transformation matrix for transformation between the image coordinates of the first image and the image coordinates of the second image. Step S301 and step S303 to step S307 in Fig. 3 are similar to step S101 to step S106 in Fig. 1, respectively, and details are not described herein again. Therefore, the second transformation matrix for transformation between the image coordinates of the first image and the image coordinates of the second image is determined, and then a mapping relationship between the image coordinates of the two images of the same part of the target object included in the first image and the second image can be obtained. When the first image and the second image are images captured by the same camera at different positions and at different angles, a transformation matrix (homography transformation matrix) can be used to obtain an accurate transformation result between the first image and the second image.

According to some examples, the determining a second transformation matrix may include: performing matching on the first image and the second image, to obtain a plurality of matching point pairs; and determining the second transformation matrix for transformation between the image coordinates of the first image and the image coordinates of the second image based on the plurality of matching point pairs. Therefore, the matching is performed on the first image and the second image, to obtain the plurality of matching point pairs, and the second transformation matrix is determined based on these matching point pairs, so that the second transformation matrix representing the mapping relationship between the first image and the second image can be efficiently and accurately calculated.

In an exemplary example, first, feature point extraction may be performed on each of the first image and the second image. In order to achieve fast feature point extraction, a feature point extraction solution based on Oriented FAST and Rotated BRIEF (ORB) may be used. Because feature points have rotation and scale invariance, and the solution is based on Features from Accelerated Segment Test (FAST) for searching for key points, and combines a Binary Robust Independent Elementary Features (BRIEF) feature description algorithm, both speed and effect can be taken into account. After the feature points are extracted, matching between the feature points is implemented based on a Fast Library for Approximate Nearest Neighbors (FLANN) matching algorithm, to obtain matching point pairs of an *i*^{th} frame of image (i.e. the first image) and an (*i*+*1)*^{th} frame of image (i.e. the second image). After the matching point pairs are obtained, the homography transformation matrix *H*_{*i,i*+1} for the two consecutive frames, namely, the second transformation matrix may be calculated by using a RANSAC-based method based on the matching point pairs of the *i*^{th} frame of image and the (*i*+*1)*^{th} frame of image calculated in the previous step.

According to some examples, the first stitching line segment of the first image and the second stitching line segment of the second image may be determined, to delimit an area to be stitched in the first image. For example, according to positions of objects (for example, characters) to be recognized in the first image and second image, the first stitching line segment and the second stitching line segment may be set to be perpendicular or approximately perpendicular to an arrangement direction of the characters and greater than the height of the characters, or the first stitching line segment and the second stitching line segment may be directly set as one vertical side of the first image and one vertical side of the second image, respectively. This is not limited herein. Exemplarily, as shown in Fig. 2, the first stitching line segment in the first image 201 is *AᵢBᵢ*, and the second stitching line segment in the second image 202 is *A*_{*i*+}*₁B*_{*i*+}*₁.*

According to some examples, after the second transformation matrix is obtained and the second stitching line segment is determined, the first matching line segment may be determined in the first image based on the second transformation matrix. For example, respective mapping pixels, in the first image, of two endpoints of the second stitching line segment in the second image may be calculated based on the second transformation matrix, and the first matching line segment is determined based on the two mapping pixels. For example, mapping pixels, in the first image, of all points of the second stitching line segment may alternatively or additionally be calculated based on the second transformation matrix, and the first matching line segment is obtained based on these mapping pixels, or the first matching line segment is determined in other manners. This is not limited herein. Exemplarily, as shown in Fig. 2, the first matching line segment in the first image that corresponds to the second stitching line segment *A*_{*i*+}*₁B*_{*i*+*1*} is *AₚBₚ.*

According to some examples, after the first stitching line segment of the first image, the second stitching line segment of the second image, and the first matching line segment in the first image are determined, the first stitching area of the first image may be determined based on the first stitching line segment and the first matching line segment. Exemplarily, as shown in Fig. 2, a quadrilateral area *AᵢBᵢBₚAₚ* obtained in the first image 201 based on the first stitching line segment *AᵢBᵢ* and the first matching line segment *AₚBₚ,* namely, a shaded area in the figure, is used as the first stitching area.

After the first stitching area of the first image is determined, the first target canvas may be configured at least based on the first stitching area. A shape of the first target canvas may be, for example, a rectangle, a parallelogram, a trapezoid, an irregular polygon, or another shape, which is not limited herein.

According to some examples, the height of the first target canvas may be the same as the height of the first image, and the width of the first target canvas may be configured at least based on the first stitching area. As shown in Fig. 2, the height *D₁D₂* of the first target canvas 203 and the height *AᵢBᵢ* of the first image 201 are both H, and the width W₁ of the first target canvas 203 may be set based on the first stitching area *AᵢBᵢBₚAₚ*, namely, the shaded area. Therefore, the height of the target canvas is set to be consistent with the height of the first image, and the width of the target canvas is configured based on the first stitching area, so that an image mapped onto the first target canvas is less distorted, that is, the original appearance of a text, an object, or a target to be recognized can be better restored, thereby facilitating further processing of tasks such as text extraction and recognition and object detection.

According to some examples, the first target canvas may alternatively or additionally be set based on the first stitching area and a tilt angle of the video camera for capturing the first image. Because images captured by the camera at different tilt angles has different perspective effects, the tilt angle of the video camera for capturing may be used as a reference while setting the first target canvas. Therefore, according to the foregoing method, the width of the first target canvas may be configured based on the capturing tilt angle of the video camera, so that the original appearance of the text, object, etc. to be recognized can be restored on the canvas with less distortion, thereby avoiding uneven widths of different parts of the restored text, object, etc. caused by photos captured at different tilt angles having the same canvas width. The tilt angle of the video camera, for example, may be directly obtained by a sensor on an electronic device, or may be calculated based on a captured image, for example, based on a distortion shape of a character, a text, or another object in the captured image. This is not limited herein.

When the first target canvas corresponding to the first image is set, in addition to the above-mentioned elements, reference may also be made to other elements. According to some examples, the width of the first target canvas may be configured based on an expectation that a character in the mapped image on the canvas is fat or thin, that is, the fatness and thinness of the character in the mapped image is determined by setting the width of the canvas, so as to help further improve the accuracy and recognizability of the mapped image to be stitched and the stitched image, and improve the accuracy of subsequent tasks such as text extraction and recognition.

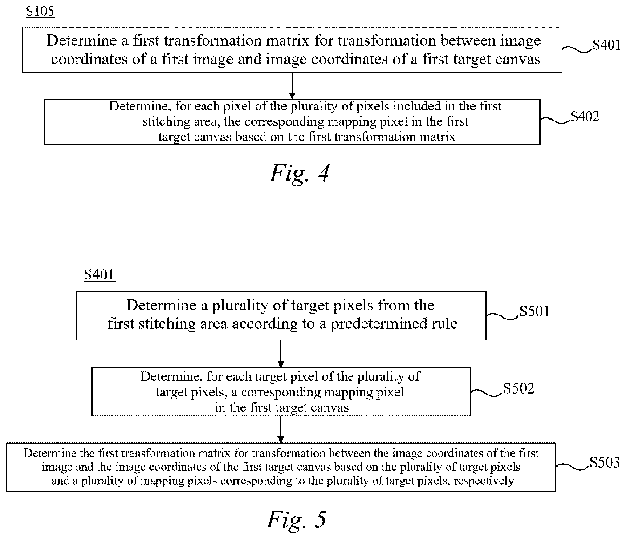

After the first target canvas corresponding to the first image is set, the corresponding mapping pixel, of the pixel, in the first target canvas may be determined for each pixel in the plurality of pixels included in the first stitching area. According to some examples, as shown in Fig. 4, step S105 of determining, for each pixel of a plurality of pixels included in the first stitching area, a corresponding mapping pixel in the first target canvas, respectively, may include: step S401: determining a first transformation matrix for transformation between image coordinates of the first image and image coordinates of the first target canvas; and step S402: determining, for each pixel of the plurality of pixels included in the first stitching area, the corresponding mapping pixel in the first target canvas based on the first transformation matrix. Therefore, the first transformation matrix *Qᵢ* representing the coordinate transformation from the first image to the first target canvas (or from the first target canvas to the first image) is determined by using the above steps, and the pixel mapping relationship between the first stitching area and the first target canvas is determined based on the matrix. In addition, because the image coordinates of the first target canvas and the image coordinates of the first image can be transformed from each other by using a transformation matrix, that is, the relationship between the first target canvas and the first image is a homography transformation relationship, this ensures the authenticity and accuracy of the image obtained after mapping in the first target canvas, and avoids the introduction of new distortion in the mapping process.

According to some examples, as shown in Fig. 5, step S401 of determining a first transformation matrix for transformation between image coordinates of the first image and image coordinates of the first target canvas may include: step S501: determining a plurality of target pixels from the first stitching area according to a predetermined rule; step S502: determining, for each target pixel of the plurality of target pixels, a corresponding mapping pixel in the first target canvas ; and step S503: determining the first transformation matrix for transformation between the image coordinates of the first image and the image coordinates of the first target canvas based on the plurality of target pixels and a plurality of mapping pixels corresponding to the plurality of target pixels, respectively. Therefore, the plurality of target pixels are determined according to the predetermined rule, and the first transformation matrix *Qᵢ* for transformation between the image coordinates of the first image and the image coordinates of the first target canvas is determined based on these target pixels and the mapping pixels respectively corresponding to these target pixels, thereby implementing a simpler manner of generating the transformation matrix. In addition, the plurality of target pixels determined according to the predetermined rule are used, so that a transformed image on the first target canvas and presentation manners and parameters of characters in the image can be better determined, such as whether sizes of different characters are consistent, whether the widths of the characters are appropriate, whether the arrangement of the characters is too curved, etc., and the accuracy of subsequent character extraction and recognition can be further improved. The predetermined rule may be, for example, four points that are not collinear in the first image, and then the first transformation matrix *Qᵢ* may be generated based on coordinates of the four points in the first image and their respective coordinates in the first target canvas. It should be appreciated that the predetermined rule is used as illustrative examples. The rule may also be dynamically determined, experimentally determined or determined through other approaches, which are all included in the scope of the disclosure.

According to some examples, step S501 of determining a plurality of target pixels from the first stitching area according to a predetermined rule may include: determining the plurality of target pixels according to the predetermined rule and based on the first stitching line segment, the first matching line segment, and the second stitching line segment. Because the first stitching line segment and the first matching line segment may be used to determine the range of the first stitching area, and the first matching line segment and the second stitching line segment and the mapping relationship between them can reflect information about the second image, the plurality of target pixels are obtained based on these line segments, so that the information included in these line segments can be used to a greater extent, to obtain a more logical first transformation matrix *Qᵢ,* and further improve the accuracy of subsequent character extraction and recognition.

According to some examples, the plurality of target pixels may include a first target pixel, and the image stitching method may further include: obtaining the first target pixel on the first matching line segment that matches the midpoint of the second stitching line segment, for example, as shown in Fig. 2, a first target pixel *Mₚ* that matches the midpoint *M*_{*i*+*1*} of the second stitching line segment *A*_{*i*+}*₁B*_{*i*+}*₁.* Therefore, by determining the position of the first target pixel in the first target canvas that is obtained in the above manner, the position of the midpoint of the second stitching line segment of the second image that is mapped in the first target canvas can be adjusted, thereby optimizing smoothness of stitching between the first target canvas and a second target canvas corresponding to the second image, and further improving the quality of image stitching.

According to some examples, the first target canvas may include a first vertical side corresponding to the first stitching line segment and a second vertical side opposite to the first vertical side. As shown in Fig. 2, a mapping pixel in the first target canvas 203 that corresponds to the first target pixel *Mₚ* is the midpoint *D₄* of the second vertical side *D₉D₈* of the first target canvas 203. Therefore, the first stitching line segment in the first image is made to correspond to the first vertical side of the first target canvas, and the mapping pixel corresponding to the first target pixel is set to the midpoint of the second vertical side of the first target canvas, so that the smoothness of stitching between the first target canvas and the second target canvas corresponding to the second image can be further optimized, and the quality of image stitching can be further improved.

According to some examples, the plurality of target pixels may further include a second target pixel. As shown in Fig. 2, the second target pixel is the midpoint C of the connecting line between the first target pixel *Mₚ* and the midpoint *Mᵢ* of the first stitching line segment *AᵢBᵢ.* Therefore, by determining the position for the second target pixel in the first target canvas that is obtained in the above manner, the position, mapped in the first target canvas, of the midpoint of the connecting line between the first target pixel and the midpoint of the first stitching line segment can be adjusted, thereby better adjusting shapes, an inclination angle of an arrangement direction, distortion, and other parameters of the characters in the mapped image to be stitched in the first target canvas. The second target pixel and the first target pixel are jointly controlled, so that a position of the center line of the first stitching area when mapped onto the first target canvas can be determined, thereby further optimizing the smoothness of stitching between the first target canvas and the second target canvas corresponding to the second image, and further improving the quality of image stitching.

According to some examples, as shown in Fig. 2, a mapping pixel in the first target canvas 201 that corresponds to the second target pixel *C* may be the central point *D₅* of the first target canvas. Therefore, the mapping pixel corresponding to the second target pixel is set to the central point of the first target canvas, so that the characters in the image to be stitched in the first target canvas can be made consistent in size and neatly arranged. Both the mapping pixel of the second target pixel and the mapping pixel of the first target pixel are set on the center line of the first target canvas, so that the center lines can coincide when the first target canvas and the second target canvas corresponding to the second image are stitched together, thereby further optimizing the smoothness of stitching between a plurality of canvases, and further improving the quality of image stitching.

According to some examples, as shown in Fig. 2, the plurality of target pixels may include two endpoints *Aᵢ* and *Bᵢ* of the first stitching line segment *AᵢBᵢ.* Therefore, the two endpoints of the first stitching line segment are controlled to respectively correspond to two mapping pixels of the first target canvas, so that a mapping position of the first stitching line segment in the first target canvas can be better determined, thereby better adjusting the shapes, the inclination angle of the arrangement direction, distortion, and other parameters of the characters in the mapped image to be stitched in the first target canvas.

According to some examples, the first target canvas may include a first vertical side corresponding to the first stitching line segment and a second vertical side opposite to the first vertical side. As shown in Fig. 2, two mapping pixels in the first target canvas 203 that correspond to the two endpoints *Aᵢ* and *Bᵢ* of the first stitching line segment are respectively two endpoints *D₁* and *D₂* of the first vertical side *D₁D₂* of the first target canvas 203. Therefore, the two mapping pixels corresponding to the two endpoints of the first stitching line segment are respectively set to the two endpoints of the first vertical side of the first target canvas, so that the first stitching line segment of the first image extends as much as possible after the mapping and is the same as its original length, and the first stitching line segment keeps perpendicular to the center line, thereby further making the characters in the image to be stitched in the first target canvas arranged neatly. In addition, positions of the plurality of target pixels and their mapping pixels determined in the foregoing manner are all edge positions or midpoints (or mapping of midpoints), so that the computational complexity of the first transformation matrix *Qᵢ* is relatively low, and a processing speed of the image stitching method is further increased.

In addition to the foregoing method, for example, a findHomography function in OpenCV may be invoked to calculate the first transformation matrix *Qᵢ*, or other methods are used to calculate the first transformation matrix *Qᵢ* while it is ensured that the first target pixel and the second target pixel are mapped on the center line. This is not limited herein.

After the first transformation matrix *Qᵢ* is obtained, the mapping pixels, in the first target canvas, of the pixels in the first image may be determined based on the first transformation matrix *Qi,* and then all or a part of the pixel values of the first image are mapped to the first target canvas, to obtain the image to be stitched of the first image. The image to be stitched may be cropped after mapping, to obtain an image to be stitched that is more suitable for stitching. Exemplarily, as shown in Fig. 2, for example, the first stitching area *AᵢBᵢBₚAₚ,* namely, the shaded area, may be mapped to *D₁D₂D₆D₇,* or the first image 201 may be completely mapped to the first target canvas 203, and then cropped according to *D₁D₂D₈D₉,* so as to further stitch the subsequent canvases.

According to some examples, as shown in Fig. 3, the image stitching method may further include: step S308: obtaining a third image, where the third image and the second image have an overlapping area; step S309: determining a third stitching line segment of the third image, where the third stitching line segment has a second matching line segment in the second image; step S310: determining a second stitching area of the second image based on the second stitching line segment and the second matching line segment; step S311: configuring a second target canvas at least based on the second stitching area; step S312: determining, for each pixel of a plurality of pixels included in the second stitching area, a corresponding mapping pixel in the second target canvas; step S313: mapping values of the plurality of pixels included in the second stitching area to the corresponding mapping pixels in the second target canvas, respectively, to obtain an image to be stitched of the second image; and step S314: directly stitching the first target canvas and the second target canvas directly. Therefore, the second target canvas corresponding to the second image is configured, the second image is mapped to the second target canvas based on the second image and the third image, and the first target canvas and the second target canvas are directly stitched, thereby implementing stitching between two or even more images.

It can be understood that the content of steps S308 to S313 in Fig. 3 is similar to that of steps S101 to S106 in Fig. 1, except that operation objects are changed from the first image and the second image to the second image and the third image. Therefore, the specific content thereof is not repeated.

According to some examples, the second target canvas and the first target canvas may have the same shape. Exemplarily, as shown in Fig. 2, the second target canvas 204 and the first target canvas 203 are both rectangular. Therefore, the second target canvas and the first target canvas are set to be the same shape, so that stitching between the canvases becomes easier, and a result of the stitching between the canvases is more regular, which facilitates the subsequent further processing of the images and execution of tasks such as text recognition and target recognition.

According to some examples, the first target canvas and the second target canvas may be directly stitched based on a center line of the first target canvas and a center line of the second target canvas. Therefore, the second target canvas and the first target canvas are directly stitched, so that a stitched image maintains a relationship between the center lines of the original images, and the complexity of the stitching process is reduced through direct stitching, thereby improving the efficiency of stitching. As shown in Fig. 2, *D₁'* and *D₂'* in the second target canvas 204 may be stitched with *D₉* and *D₈* in the first target canvas 203 respectively, to obtain a stitched image.

According to some examples, processing of the last frame of image may be: for example, directly stitching the last frame of image with a stitched image based on all previous images; or may be: mapping all overlapping parts of the penultimate frame of image and the last frame of image to a canvas corresponding to the penultimate frame of image, and then directly stitching the remaining part of the last frame of image with a stitched image based on all previous images; or may be: using a transformation matrix *Q*ₙ₋₁ between the penultimate frame of image and its corresponding canvas to perform transformation processing on the last frame of image, to obtain an image to be stitched corresponding to the last frame of image, and then stitching same to a stitched image based on all previous images. It can be understood that other means may also be used to process the last frame of the image. This is not limited herein.

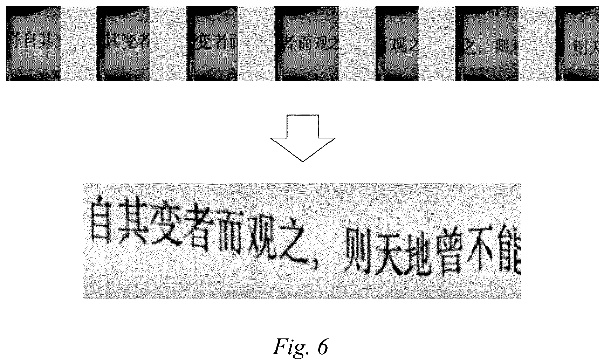

A stitched image obtained by using the image stitching method according to the present disclosure is shown in Fig. 6. A plurality of images including characters are mapped and then are directly stitched, and a long-text stitched image with consistent character sizes can be obtained. The stitched image may be further processed, for example, the text is arranged along a straight line for text recognition.

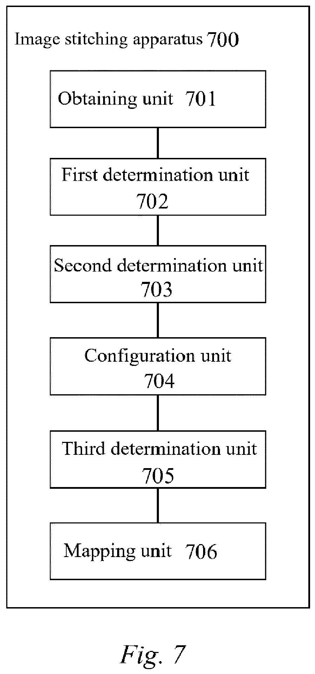

According to another aspect of the present disclosure, there is further provided an image stitching apparatus. As shown in Fig. 7, the image stitching apparatus 700 may include: an obtaining unit 701 configured to obtain a first image and a second image, where the first image and the second image have an overlapping area; a first determination unit 702 configured to determine a first stitching line segment of the first image and a second stitching line segment of the second image, where the second stitching line segment has a first matching line segment in the first image; a second determination unit 703 configured to determine a first stitching area of the first image based on the first stitching line segment and the first matching line segment; a configuration unit 704 configured to configure a first target canvas at least based on the first stitching area; a third determination unit 705 configured to, determine, for each pixel in a plurality of pixels included in the first stitching area, a corresponding mapping pixel in the first target canvas; and a mapping unit 706 configured to map values of the plurality of pixels included in the first stitching area to the corresponding mapping pixels in the first target canvas, respectively, to obtain an image to be stitched of the first image.

The operations of the unit 701 and the unit 706 of the image stitching apparatus 700 are similar to the operations of steps S 101 to step S 106 described above, and details are not described herein again.

According to an example of the present disclosure, there is further provided an electronic device, a readable storage medium, and a computer program product.

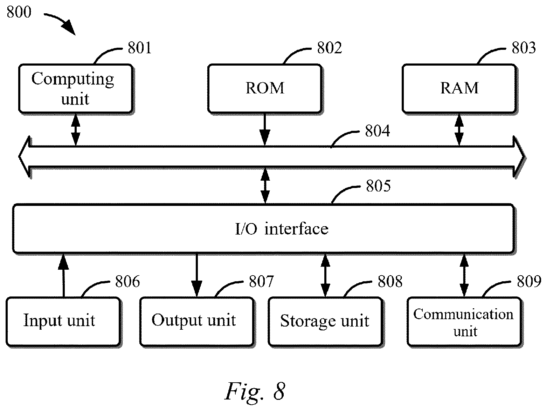

Referring to Fig. 8, a structural block diagram of an electronic device 800 that can serve as a server or a client of the present disclosure is now described, which is an example of a hardware device that can be applied to various aspects of the present disclosure. The electronic device is intended to represent various forms of digital electronic computer devices, such as a laptop computer, a desktop computer, a workstation, a personal digital assistant, a server, a blade server, a mainframe computer, and other suitable computers. The electronic device may further represent various forms of mobile apparatuses, such as a personal digital assistant, a cellular phone, a smartphone, a wearable device, and other similar computing apparatuses. The components shown herein, their connections and relationships, and their functions are merely examples, and are not intended to limit the implementation of the present disclosure described and/or required herein.

As shown in Fig. 8, the device 800 includes a computing unit 801, which may perform various appropriate actions and processing according to a computer program stored in a read-only memory (ROM) 802 or a computer program loaded from a storage unit 808 to a random access memory (RAM) 803. The RAM 803 may further store various programs and data required for the operation of the device 800. The computing unit 801, the ROM 802, and the RAM 803 are connected to each other through a bus 804. An input/output (I/O) interface 805 is also connected to the bus 804.

A plurality of components in the device 800 are connected to the I/O interface 805, including: an input unit 806, an output unit 807, the storage unit 808, and a communication unit 809. The input unit 806 may be any type of device capable of entering information to the device 800. The input unit 806 can receive entered digit or character information, and generate a key signal input related to user settings and/or function control of the electronic device, and may include, but is not limited to, a mouse, a keyboard, a touchscreen, a trackpad, a trackball, a joystick, a microphone, and/or a remote controller. The output unit 807 may be any type of device capable of presenting information, and may include, but is not limited to, a display, a speaker, a video/audio output terminal, a vibrator, and/or a printer. The storage unit 808 may include, but is not limited to, a magnetic disk and an optical disc. The communication unit 809 allows the device 800 to exchange information/data with other devices via a computer network such as the Internet and/or various telecommunications networks, and may include, but is not limited to, a modem, a network interface card, an infrared communication device, a wireless communication transceiver and/or a chipset, e.g., a Bluetooth^{™} device, a 1302.11 device, a Wi-Fi device, a WiMax device, a cellular communication device and/or the like.

The computing unit 801 may be various general-purpose and/or special-purpose processing components with processing and computing capabilities. Some examples of the computing unit 801 include, but are not limited to, a central processing unit (CPU), a graphics processing unit (GPU), various dedicated artificial intelligence (AI) computing chips, various computing units that run machine learning model algorithms, a digital signal processor (DSP), and any appropriate processor, controller, microcontroller, etc. The computing unit 801 performs the various methods and processing described above, for example, the image stitching method. For example, in some examples, the image stitching method may be implemented as a computer software program, which is tangibly contained in a machine-readable medium, such as the storage unit 808. In some examples, a part or all of the computer program may be loaded and/or installed onto the device 800 via the ROM 802 and/or the communication unit 809. When the computer program is loaded to the RAM 803 and executed by the computing unit 801, one or more steps of the image stitching method described above can be performed. Alternatively or additionally, in other examples, the computing unit 801 may be configured, by any other suitable means (for example, by means of firmware), to perform the image stitching method.

Various implementations of the systems and technologies described herein above can be implemented in a digital electronic circuit system, an integrated circuit system, a field programmable gate array (FPGA), an application-specific integrated circuit (ASIC), an application-specific standard product (ASSP), a system-on-chip (SOC) system, a load programmable logical device (CPLD), computer hardware, firmware, software, and/or a combination thereof. These various implementations may include: the systems and technologies are implemented in one or more computer programs, where the one or more computer programs may be executed and/or interpreted on a programmable system including at least one programmable processor. The programmable processor may be a dedicated or general-purpose programmable processor that can receive data and instructions from a storage system, at least one input apparatus, and at least one output apparatus, and transmit data and instructions to the storage system, the at least one input apparatus, and the at least one output apparatus.

A program code used to implement the method of the present disclosure can be written in any combination of one or more programming languages. These program codes may be provided for a processor or a controller of a general-purpose computer, a special-purpose computer, or other programmable data processing apparatuses, such that when the program codes are executed by the processor or the controller, the functions/operations specified in the flowcharts and/or block diagrams are implemented. The program codes may be completely executed on a machine, or partially executed on a machine, or may be, as an independent software package, partially executed on a machine and partially executed on a remote machine, or completely executed on a remote machine or a server.

In the context of the present disclosure, the machine-readable medium may be a tangible medium, which may contain or store a program for use by an instruction execution system, apparatus, or device, or for use in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

In order to provide interaction with a user, the systems and technologies described herein can be implemented on a computer which has: a display apparatus (for example, a cathode-ray tube (CRT) or a liquid crystal display (LCD) monitor) configured to display information to the user; and a keyboard and pointing apparatus (for example, a mouse or a trackball) through which the user can provide an input to the computer. Other types of apparatuses can also be used to provide interaction with the user; for example, feedback provided to the user can be any form of sensory feedback (for example, visual feedback, auditory feedback, or tactile feedback), and an input from the user can be received in any form (including an acoustic input, voice input, or tactile input).

The systems and technologies described herein can be implemented in a computing system (for example, as a data server) including a backend component, or a computing system (for example, an application server) including a middleware component, or a computing system (for example, a user computer with a graphical user interface or a web browser through which the user can interact with the implementation of the systems and technologies described herein) including a frontend component, or a computing system including any combination of the backend component, the middleware component, or the frontend component. The components of the system can be connected to each other through digital data communication (for example, a communications network) in any form or medium. Examples of the communications network include: a local area network (LAN), a wide area network (WAN), and the Internet.

A computer system may include a client and a server. The client and the server are generally far away from each other and usually interact through a communications network. A relationship between the client and the server is generated by computer programs running on respective computers and having a client-server relationship with each other.

It should be understood that steps may be reordered, added, or deleted based on the various forms of procedures shown above. For example, the steps recorded in the present disclosure can be performed in parallel, in order, or in a different order, provided that the desired result of the technical solutions disclosed in the present disclosure can be achieved, which is not limited herein.

Although the examples of the present disclosure have been described with reference to the drawings, it should be appreciated that the methods, systems and devices described above are merely exemplary examples, and the scope of the present invention is not limited by the examples, but only defined by the appended authorized claims and equivalent scopes thereof. Various elements in the examples may be omitted or substituted by equivalent elements thereof. Moreover, the steps may be performed in an order different from that described in the present disclosure. Further, various elements in the examples may be combined in various ways. It is important that, as the technology evolves, many elements described herein may be replaced with equivalent elements that appear after the present disclosure.

## Claims

1. A computer-implemented image stitching method, the method comprising:
obtaining (S 101) a first image and a second image, wherein the first image and the second image have an overlapping area;
determining (S 102) a first stitching line segment of the first image and a second stitching line segment of the second image, wherein the second stitching line segment has a first matching line segment in the first image;
determining (S103) a first stitching area of the first image based on the first stitching line segment and the first matching line segment, the first stitching area including a plurality of pixels;
configuring (S104) a first target canvas at least based on the first stitching area;
determining (S 105), for each pixel of the plurality of pixels in the first stitching area, a corresponding mapping pixel in the first target canvas; and
mapping (S 106) pixel values of the plurality of pixels in the first stitching area to the corresponding mapping pixels in the first target canvas, respectively, to obtain an image to be stitched of the first image.

2. The method according to claim 1, the method further comprising:
obtaining a third image, wherein the third image and the second image have an overlapping area;
determining a third stitching line segment of the third image, wherein the third stitching line segment has a second matching line segment in the second image;
determining a second stitching area of the second image based on the second stitching line segment and the second matching line segment, the second stitching area including a plurality of pixels;
configuring a second target canvas at least based on the second stitching area;
determining, for each pixel of the plurality of pixels in the second stitching area, a corresponding mapping pixel in the second target canvas;
mapping pixel values of the plurality of pixels in the second stitching area to the corresponding mapping pixels in the second target canvas, respectively, to obtain an image to be stitched of the second image; and
stitching the first target canvas and the second target canvas directly.

3. The method according to claim 2, wherein the second target canvas and the first target canvas have a same shape, and optionally
wherein the first target canvas and the second target canvas are stitched directly based on a center line of the first target canvas and a center line of the second target canvas.

4. The method according to any one of claims 1 to 3, wherein the determining the corresponding mapping pixel in the first target canvas comprises:
determining a first transformation matrix for transformation between image coordinates of the first image and image coordinates of the first target canvas; and
determining, for each pixel of the plurality of pixels comprised in the first stitching area, the corresponding mapping pixel in the first target canvas based on the first transformation matrix.

5. The method according to claim 4, wherein the determining the first transformation matrix for transformation between image coordinates of the first image and image coordinates of the first target canvas comprises:
determining a plurality of target pixels from the first stitching area according to a predetermined rule;
determining, for each target pixel of the plurality of target pixels, a corresponding mapping pixel in the first target canvas; and
determining the first transformation matrix for transformation between the image coordinates of the first image and the image coordinates of the first target canvas based on the plurality of target pixels and a plurality of mapping pixels corresponding to the plurality of target pixels, respectively.

6. The method according to claim 5, wherein the determining the plurality of target pixels from the first stitching area according to the predetermined rule comprises:
determining the plurality of target pixels according to the predetermined rule and based on the first stitching line segment, the first matching line segment, and the second stitching line segment, and optionally
wherein the plurality of target pixels comprise a first target pixel, and wherein the method further comprises:
obtaining the first target pixel on the first matching line segment that matches a midpoint of the second stitching line segment.

7. The method according to claim 6, wherein the first target canvas comprises a first side corresponding to the first stitching line segment and a second side opposite to the first side,
wherein a mapping pixel in the first target canvas that corresponds to the first target pixel is a midpoint of the second side of the first target canvas.

8. The method according to claim 7, wherein the plurality of target pixels further comprise a second target pixel, and
the second target pixel is a midpoint of the connecting line between the first target pixel and a midpoint of the first stitching line segment, and optionally
wherein a mapping pixel in the first target canvas that corresponds to the second target pixel is a central point of the first target canvas.

9. The method according to claim 5, wherein the plurality of target pixels comprise two endpoints of the first stitching line segment and optionally
wherein the first target canvas comprises a first side corresponding to the first stitching line segment and a second side opposite to the first side, and
wherein two mapping pixels in the first target canvas that correspond to the two endpoints of the first stitching line segment are two endpoints of the first side of the first target canvas, respectively.

10. The method according to any one of claims 1 to 9, the method further comprising:
determining a second transformation matrix for transformation between the image coordinates of the first image and image coordinates of the second image,
wherein the first matching line segment in the first image is determined based on the second transformation matrix, and optionally
wherein the determining the second transformation matrix comprises:
performing matching between the first image and the second image, to obtain a plurality of matching point pairs; and
determining the second transformation matrix for transformation between the image coordinates of the first image and the image coordinates of the second image based on the plurality of matching point pairs.

11. The method according to any one of claims 1 to 10, wherein the height of the first target canvas is the same as the height of the first image, and the configuring the first target canvas at least based on the first stitching area comprises:
configuring the width of the first target canvas at least based on the first stitching area.

12. The method according to any one of claims 1 to 11, wherein the first image and the second image are two consecutive video frames of a same video, the first image is a previous video frame, and the second image is a later video frame.

13. The method according to claim 12, wherein both the first image and the second image comprise a part of a target object, the first image and the second image are captured by a tilted video camera, and an optical axis of the video camera is not perpendicular to a surface on which the target object is placed, and optionally
wherein the configuring the first target canvas at least based on the first stitching area comprises:
configuring the first target canvas based on the first stitching area and a tilt angle of the video camera as capturing the first image.

14. The method according to any one of claims 1 to 13, wherein both the first image and the second image comprise one or more lines of characters.

15. An image stitching apparatus, comprising:
an obtaining unit (701) configured to obtain a first image and a second image, wherein the first image and the second image have an overlapping area;
a first determination unit (702) configured to determine a first stitching line segment of the first image and a second stitching line segment of the second image, wherein the second stitching line segment has a first matching line segment in the first image;
a second determination unit (703) configured to determine a first stitching area of the first image based on the first stitching line segment and the first matching line segment, the first stitching area including a plurality of pixels;
a configuration unit (704) configured to configure a first target canvas at least based on the first stitching area;
a third determination unit (705) configured to determine, for each pixel in the plurality of pixels in the first stitching area, a corresponding mapping pixel in the first target canvas; and
a mapping unit (706) configured to map pixel values of the plurality of pixels in the first stitching area to the corresponding mapping pixels in the first target canvas, respectively, to obtain an image to be stitched of the first image.

16. A computer-readable storage medium comprising instructions, which, when executed by a computer, causes the computer to carry out the method of any one of claims 1 to 14.

17. A computer program product comprising instructions, which, when the program is executed by a computer, cause the computer to carry out the method of any one of claims 1 to 14.
